# EUROPÄISCHE PATENTSCHRIFT

(11) **EP 1 376 281 B1**
(45) Veröffentlichungstag und Bekanntmachung des Hinweises auf die Patenterteilung: **05.11.2008**
(21) Anmeldenummer: 02014494.5
(22) Anmeldetag: 29.06.2002
(51) Int. Cl.: G05B 19/418, G05B 19/05

(54) **Verfahren und System zum Verarbeiten von Konfigurationsdaten**
Method and system for processing configuration data
Procédé et système de traitement de données de configuration

(43) Veröffentlichungstag der Anmeldung: 02.01.2004
(73) Patentinhaber: ABB Research Ltd., 8050 Zürich (CH)
(72) Erfinder: Langer, Kurt, Dr., 69190 Walldorf (DE); Weber, Peter, 67117 Limburghof (DE); Merker, Peter, 68766 Hockenheim (DE); Vahldieck, Rolf, 32425 Minden (DE)
(74) Vertreter: Miller, Toivo

(56) Entgegenhaltungen:
- WO-A-98/53581
- US-A1- 2002 046 239
- KEMPNY H P ET AL: "HERSTELLERNEUTRALE KONFIGURIERUNG VON PROZESSLEITSYSTEMEN" AUTOMATISIERUNGSTECHNISCHE PRAXIS - ATP, OLDENBOURG VERLAG. MUNCHEN, DE, Bd. 32, Nr. 11, 1. November 1990 (1990-11-01), Seiten 529-536, XP000173230 ISSN: 0178-2320

## Beschreibung

Die Erfindung betrifft ein Verfahren zum Verarbeiten von Konfigurationsdaten beziehungsweise Bulkdaten in einer Prozessumgebung mit mindestens einem Server, einem verteilten Automationssystem, welches eine Vielzahl von Automationssubsystemen umfasst, mindestens einer Client-Anwendung, bidirektionalen Schnittstellen zwischen den Automationssubsystemen und dem mindestens einen Server und mindestens einer bidirektionalen Schnittstelle zwischen der mindestens einen Client-Anwendung und dem mindestens einen Server, bei dem zwischen der mindestens einen Client-Anwendung und dem mindestens einen Server Konfigurationsdaten beziehungsweise Bulkdaten übertragen werden und zwischen dem mindestens einen Server und den Automationssubsystemen Konfigurationsdaten beziehungsweise Bulkdaten übertragen werden.

Die Erfindung betrifft weiterhin ein System zum Verarbeiten von Konfigurationsdaten beziehungsweise Bulkdaten in einer Prozessumgebung mit mindestens einem Server, einem verteilten Automationssystem, welches eine Vielzahl von Automationssubsystemen umfasst, mindestens einer Client-Anwendung, bidirektionalen Schnittstellen zwischen den Automationssubsystemen und dem mindestens einen Server und mindestens einer bidirektionalen Schnittstelle zwischen der mindestens einen Client-Anwendung und dem mindestens einen Server, bei dem zwischen der mindestens einen Client-Anwendung und dem mindestens einen Server Konfigurationsdaten beziehungsweise Bulkdaten übertragbar sind und zwischen dem mindestens einen Server und den Automationssubsystemen Konfigurationsdaten beziehungsweise Bulkdaten übertragbar sind.

Derartige Verfahren und Systeme kommen insbesondere im Rahmen einer automatischen Prozessführung bei der industriellen Fertigung von Wirtschaftgütern zum Einsatz. Dabei stellt sich regelmäßig die Notwendigkeit ein, dass Automationssubsysteme neu konfiguriert werden müssen, um Prozessführungen zu verbessern oder andere Prozesslinien bei bestehenden Automationssubsystemen zu implementieren. Um diese Konfiguration vorzunehmen, muss mit einer großen Anzahl von Konfigurationsdaten oder sogenannten Bulkdaten umgegangen werden. Um die Konfigurationsdaten der Automationssubsysteme zu bearbeiten beziehungsweise neue Konfigurationsdaten in die Automationssubsysteme einzugeben, ist es in den meisten Fällen erforderlich, spezifische Tools zu verwenden, die unter Umständen für jedes Automationssubsystem unterschiedlich sein können. Der Anwender muss sich somit um eine konsistente Konfiguration der unterschiedlichen Automationssubsysteme kümmern, wobei die Eingabe der Konfigurationsdaten eine zeitaufwendige und fehleranfällige Arbeit ist. Insbesondere bei großen Prozessumgebungen kann dies zu ernsthaften und mitunter unüberwindlichen Problemen führen.

Typische Konfigurationsdaten, die in einer Prozessumgebung eingegeben werden beziehungsweise geändert werden müssen, sind Konfigurationsdaten für Eingabe/Ausgabe-Signale, Eingabe-/Ausgabe-Tafeln, Kanäle, Zuordnung von Signalen zu Kanälen und Steuerungsaufgaben für eine Steuerung.

Typische Prozessumgebungen, in denen diese und andere Aufgaben wahrgenommen werden müssen, sind als verteiltes Automationssystem mit einer Vielzahl anderer verbundener IT-Systeme aufgebaut. Die Umgebung kann auch eine Integrationsplattform umfassen, die dazu verwendet wird, eine Vielzahl von Steuerungsanwendungen und andere IT-Systeme zu integrieren.

Ein Automationssystem umfasst typischerweise Workstations, Controller, Kommunikationsnetzwerke, Feldvorrichtungen, etc. und verschiedene Tools, beispielsweise zum Bearbeiten, Betreiben, Überwachen, Untersuchen und dergleichen. Ebenfalls können Tools für Asset-Management, Prozessoptimierung und dergleichen vorgesehen sein.

Dokument WO-A-9853581 beschreibt ein System, das Automationssubsysteme, einen Server und mehrere Client-Workstations aufweist, sowie ein Verfahren zum Datenaustausch zwischen diesen Komponenten. Als Automationssubsysteme werden intelligente Sensoren und Aktoren dargestellt, die je einen Mikroprozessor (oder einen Computer) aufweisen. Dabei übermitteln die Automationssubsysteme "control data" zu dem Server, der die erhaltenen Daten in ein "generic control protocol", also ein Standarddatenformat, umsetzt. Die so erhaltenen Daten werden zu den Client-Workstations übertragen, wo sie von Benutzern eingesehen und geändert werden können. Weiterhin ist vorgesehen, Konfigurationsdaten von den Clients zu dem Server zu übertragen, der diese Daten wieder in ein von den einzelnen Automationssubsystemen lesbares Format umwandelt und zu diesen Automationssubsystemen überträgt.

Im Rahmen der vorliegenden Erfindung bezieht sich der Begriff "Bulkdaten" im Allgemeinen auf alle Konfigurationsdaten, die benötigt werden, um einen Prozess zu konfigurieren, zu starten und zu betreiben, wobei die verbundenen IT-Systeme beteiligt sind.

Es ist die **Aufgabe** der vorliegenden Erfindung, ein Verfahren und ein System zur Verfügung zu stellen, so dass die genannten Probleme des Standes der Technik überwunden werden, wobei insbesondere eine bessere Handhabbarkeit der Konfigurationsdaten beziehungsweise der Bulkdaten ermöglicht werden soll.

Diese Aufgabe wird mit den Merkmalen der unabhängigen Ansprüche gelöst.

Vorteilhafte Ausführungsformen der vorliegenden Erfindung sind in den abhängigen Ansprüchen angegeben.

Die Erfindung baut auf dem gattungsgemäßen Verfahren dadurch auf, dass von den Automationssubsystemen Metadaten auf den mindestens einen Server übertragen werden und dass der Server die Metadaten nutzt, um spezifische Eigenschaften der Automationssubsysteme beim Verarbeiten von Konfigurationsdaten beziehungsweise Bulkdaten zu berücksichtigen. Auf diese Weise wird ein "Bulkdaten-Management" (BDM) zur Verfügung gestellt. Dabei handelt es sich um ein Tool, das die Möglichkeit bietet, eine große Menge von Konfigurationsdaten für eine Vielzahl von Automationssubsystemen und Anwendungen, die einer Prozessumgebung angehören, einzugeben und zu bearbeiten.

Das erfindungsgemäße Verfahren ist in besonders vorteilhafter Weise dadurch weitergebildet, dass der Server Metadaten von Automationssubsystemen liest, dass der Server Konfigurationsdaten beziehungsweise Bulkdaten von den Automationssubsystemen liest, die in Abhängigkeit des jeweiligen Automationssubsystems unterschiedliche Formate aufweisen können, dass der Server die Konfigurationsdaten beziehungsweise Bulkdaten unter Nutzung der Metadaten in Konfigurationsdaten beziehungsweise Bulkdaten mit einem einheitlichen Datenformat überführt, dass der Server die Konfigurationsdaten beziehungsweise Bulkdaten mit einheitlichem Datenformat an die mindestens eine Client-Anwendung überträgt, dass die Konfigurationsdaten beziehungsweise Bulkdaten mit einheitlichem Datenformat durch die mindestens eine Client-Anwendung, insbesondere unter Eingriff eines Anwenders, bearbeitet werden, dass die bearbeiteten Konfigurationsdaten beziehungsweise Bulkdaten mit einheitlichem Datenformat an den Server übertragen werden, dass der Server die bearbeiteten Konfigurationsdaten beziehungsweise Bulkdaten mit einheitlichem Datenformat zum Übertragen an die Automationssubsysteme aufteilt und unter Nutzung der Metadaten in Konfigurationsdaten beziehungsweise Bulkdaten überführt, die an die jeweiligen Automationssubsysteme angepasste Datenformate aufweisen, und dass der Server die Kommunikationsdaten beziehungsweise Bulkdaten, die an die jeweiligen Automationssubsysteme angepasste Datenformate aufweisen, an die Automationssubsysteme überträgt. Von dem Server wird somit ein für ein bestimmtes Automationssubsystem spezifischer Übersetzungsprozess durchgeführt, wobei der Server die Information der Metadaten ausnutzt, um den Übersetzungsprozess vorzunehmen.

Das erfindungsgemäße Verfahren kann so weitergebildet sein, dass die Metadaten Information betreffend
- verfügbare Konfigurationsparameter,
- den Datentyp der Parameter,
- Standardwerte
umfassen. Dabei handelt es sich um nützliche Informationen, die bei der Verarbeitung der Konfigurationsdaten beziehungsweise der Bulkdaten durch den Server genutzt werden können.

Weiterhin ist das erfindungsgemäße Verfahren dadurch in besonders nützlicher Weise gestaltet, dass beim Übertragen von Daten zwischen Client-Anwendungen und dem Server Protokolle, Strukturen, Modelle, Technologien aus der folgenden Gruppe verwendet werden:
- SOAP ("Simple Object Access Protocol"),
- XML ("Extensible Mark-up Language"),
- .NET-Technologie (Microsoft),
- COM-Technologie (Microsoft).

Das erfindungsgemäße Verfahren ist somit in variabler Weise gestaltbar, wobei ohne Beschränkung der Allgemeinheit die oben genannten Elemente besonders nützlich im Rahmen der vorliegenden Erfindung einsetzbar sind.

Das Verfahren ist beispielsweise dann besonders vorteilhaft einsetzbar, wenn Client-Anwendungen aus der folgenden Gruppe verwendet werden:
- Microsoft Excel,
- Web-basierte Front-End-Anwendungen.

Excel kann beispielsweise als Anwenderschnittstelle verwendet werden, um Daten in eine Tabelle einzugeben und um Daten in der Tabelle zu manipulieren, welche nachfolgend über den Server den Automationssubsystemen zugeführt werden, und um Daten, die von den Automationssubsystemen gelesen werden, zu präsentieren.

Ebenso kann eine Web-basierte Front-End-Anwendung verwendet werden, um Konfigurationsdaten einzugeben, zu verändern und anzuzeigen.

Weiterhin ist das Verfahren auf die Weise vorteilhaft ausgestaltet, dass beim Übertragen von Daten zwischen Automationssubsystemen und dem Server Protokolle, Strukturen, Modelle, Technologien aus der folgenden Gruppe verwendet werden:
- OPC (OLE für Prozesssteuerung; OLE = "Object Linking and Embedding"),
- SOAP ("Simple Object Access Protocol"),
- .NET (Microsoft),
- COM (Microsoft),
- XML ("Extensible Mark-up Language") / XSD (XML-Schema).

Somit ist auch die Übertragung der Daten zwischen den Automationssubsystemen und dem Server in vielfältiger Weise möglich, wobei die obige Aufzählung nicht abschließend ist.

Weiterhin kann vorgesehen sein, dass eine Kommunikationsschnittstelle zu einem Engineering Tool für ein Prozesssteuerungssystem, einem Engineering Tool für ein Feldbussystem, insbesondere mit FDT-Standard (Field-Device-Tool-Standard), und/oder einer Integrationsplattform, die zur Systemintegration in die Prozessumgebung vorgesehen ist, verwendet wird. Somit können verschiedenste Automationssubsysteme im Rahmen der vorliegenden Erfindung berücksichtigt werden.

Besonders nützlich ist es weiterhin, das Verfahren so auszubilden, dass der Server die Kommunikation individueller Protokolle unterstützt, indem eine Schnittstelle als Plug-in eingeführt wird. Somit erlangt das Verfahren höchste Flexibilität, da es nicht auf vorgegebene Schnittstellen eingeschränkt ist.

Die Erfindung baut auf dem gattungsgemäßen System dadurch auf, dass von den Automationssubsystemen Metadaten auf den mindestens einen Server übertragbar sind und dass die Metadaten von dem Server nutzbar sind, um spezifische Eigenschaften der Automationssubsysteme beim Verarbeiten von Konfigurationsdaten beziehungsweise Bulkdaten zu berücksichtigen. Auf diese Weise werden die Vorteile und Besonderheiten des erfindungsgemäßen Verfahrens auch im Rahmen eines Systems umgesetzt. Dies gilt auch für die nachfolgend angegebenen besonders vorteilhaften Ausführungsformen des erfindungsgemäßen Systems.

Das erfindungsgemäße System ist in besonders vorteilhafter Weise dadurch weitergebildet, dass von dem Server Metadaten von Automationssubsystemen gelesen werden können, dass von dem Server Konfigurationsdaten beziehungsweise Bulkdaten von den Automationssubsystemen gelesen werden können, wobei die Konfigurationsdaten beziehungsweise Bulkdaten in Abhängigkeit des jeweiligen Automationssubsystems unterschiedliche Formate aufweisen können, dass die Konfigurationsdaten beziehungsweise Bulkdaten durch den Server unter Nutzung der Metadaten in Konfigurationsdaten beziehungsweise Bulkdaten mit einem einheitlichen Datenformat überführbar sind, dass die Konfigurationsdaten beziehungsweise Bulkdaten mit einheitlichem Datenformat durch den Server an die mindestens eine Client-Anwendung übertragbar sind, dass die Konfigurationsdaten beziehungsweise Bulkdaten mit einheitlichem Datenformat durch die mindestens eine Client-Anwendung, insbesondere unter Eingriff eines Anwenders, bearbeitet werden können, dass die bearbeiteten Konfigurationsdaten beziehungsweise Bulkdaten mit einheitlichem Datenformat an den Server übertragbar sind, dass der Server die bearbeiteten Konfigurationsdaten beziehungsweise Bulkdaten mit einheitlichem Datenformat zum Übertragen an die Automationssubsysteme aufteilen und unter Nutzung der Metadaten in Konfigurationsdaten beziehungsweise Bulkdaten überführen kann, die an die jeweiligen Automationssubsysteme angepasste Datenformate aufweisen, und dass der Server die Konfigurationsdaten beziehungsweise Bulkdaten, die an die jeweiligen Automationssubsysteme angepasste Datenformate aufweisen, an die Automationssubsysteme übertragen kann.

Das erfindungsgemäße System kann so weitergebildet sein, dass die Metadaten Information betreffend
- verfügbare Konfigurationsparameter,
- den Datentyp der Parameter,
- Standardwerte
umfassen.

Weiterhin ist das erfindungsgemäße System dadurch in besonders nützlicher Weise gestaltet, dass beim Übertragen von Daten zwischen Client-Anwendungen und dem Server Protokolle, Strukturen, Modelle, Technologien aus der folgenden Gruppe verwendet werden können:
- SOAP ("Simple Object Access Protocol"),
- XML ("Extensible Mark-up Language"),
- .NET-Technologie (Microsoft),
- COM-Technologie (Microsoft).

Das System ist beispielsweise dann besonders vorteilhaft einsetzbar, wenn Client-Anwendungen aus der folgenden Gruppe verwendet werden können:
- Microsoft Excel,
- Web-basierte Front-End-Anwendungen.

Weiterhin ist das System auf die Weise vorteilhaft ausgestaltet, dass beim Übertragen von Daten zwischen Automationssubsystemen und dem Server Protokolle, Strukturen, Modelle, Technologien aus der folgenden Gruppe verwendet werden können:
- OPC (OLE für Prozesssteuerung; OLE = "Object Linking and Embedding"),
- SOAP ("Simple Object Access Protocol"),
- .NET (Microsoft),
- COM (Microsoft),
- XML ("Extensible Mark-up Language") / XSD (XML-Schema).

Weiterhin kann vorgesehen sein, dass eine Kommunikationsschnittstelle zu einem Engineering Tool für ein Prozesssteuerungssystem, einem Engineering Tool für ein Feldbussystem, insbesondere mit FDT-Standard (Field-Device-Tool-Standard), und/oder einer Integrationsplattform, die zur Systemintegration in die Prozessumgebung vorgesehen ist, verwendbar ist.

Besonders nützlich ist es weiterhin, das System so auszubilden, dass der Server die Kommunikation individueller Protokolle unterstützt, indem eine Schnittstelle als Plug-in einführbar ist.

Der Erfindung liegt die Erkenntnis zugrunde, dass der Server Informationen über die verfügbaren Daten von Automationssubsystemen durch das Lesen von Metadaten "erlernen" kann. Die Metadaten beschreiben die verfügbaren Konfigurationsparameter, den Datentyp der Parameter oder auch Auslassungswerte sowie andere Information, die erforderlich ist, um für den Server die Konfigurationserfordernisse der Automationssubsysteme verständlich zu machen. Die Metadaten können in unterschiedlichen Arten ausgedrückt werden, beispielsweise als XML-Schema oder durch Nummerieren von OPC-Tags. Die Schnittstellen und Protokolle zu den Automationssubsystemen sind vorzugsweise offene und standardisierte Lösungen, wie zum Beispiel COM, CORBA, JAVA-RMI oder SOAP, OPC, XML und XSD, wobei das Design der Serveranwendung die zusätzliche Möglichkeit eröffnet, spezielle Schnittstellen in Form von Plug-in einzufügen, so dass individuelle Protokolle verwendet werden können. Zusätzlich werden von dem Server Schnittstellen zu den Client-Anwendungen zur Verfügung gestellt, die für den Anwender letztlich eine anwenderfreundliche Möglichkeit zur Konfiguration der Automationssubsysteme bietet.

Die Erfindung wird nun mit Bezug auf die begleitenden Zeichnungen anhand bevorzugter Ausführungsformen beispielhaft erläutert.

Es zeigen:
- Figur 1: ein schematisches Blockschaltbild eines erfindungsgemäßen Systems;
- Figur 2: ein weiteres schematisches Blockschaltbild eines erfindungsgemäßen Systems;
- Figur 3: ein weiteres schematisches Blockschaltbild eines erfindungsgemäßen Systems;
- Figur 4: ein Blockschaltbild zur Erläuterung von Schritten des erfindungsgemäßen Verfahrens; und
- Figur 5: ein Flussdiagramm zur Erläuterung eines erfindungsgemäßen Verfahrens.

Bei der nachfolgenden Beschreibung der bevorzugten Ausführungsformen der vorliegenden Erfindung verweisen gleiche Bezugszeichen auf gleiche oder vergleichbare Komponenten.

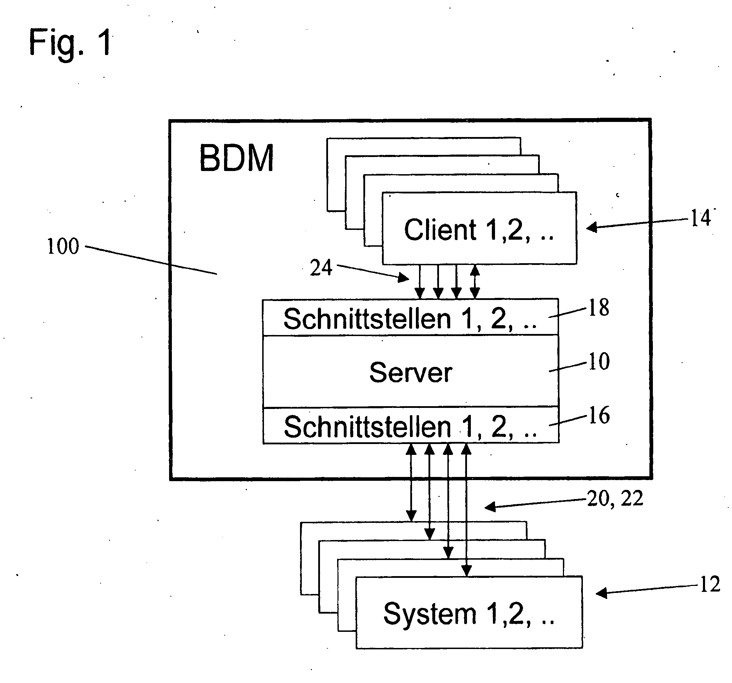

Figur 1 zeigt ein schematisches Blockschaltbild eines erfindungsgemäßen Systems. Es ist ein Bulkdatenmanager (BDM) 100 dargestellt, der einen Server 10 und eine Mehrzahl von Client-Anwendungen 14 enthält. Der Server 10 stellt Schnittstellen 18 zur Verfügung, über die eine bidirektionale Kommunikation mit den Client-Anwendungen 14 erfolgen kann. Der Server 10 stellt weitere Schnittstellen 16 zur Verfügung. Über diese Schnittstellen 16 kann eine bidirektionale Kommunikation mit Automationssubsystemen 12 erfolgen. Zwischen dem Server 10 und den Automationssubsystemen 12 werden Konfigurationsdaten beziehungsweise Bulkdaten 20 und Metadaten 22 über die Schnittstellen 16 übertragen. Zwischen dem Server 10 und den Client-Anwendungen 14 werden vereinheitlichte Konfigurationsdaten beziehungsweise Bulkdaten 24 über die Schnittstellen 18 übertragen.

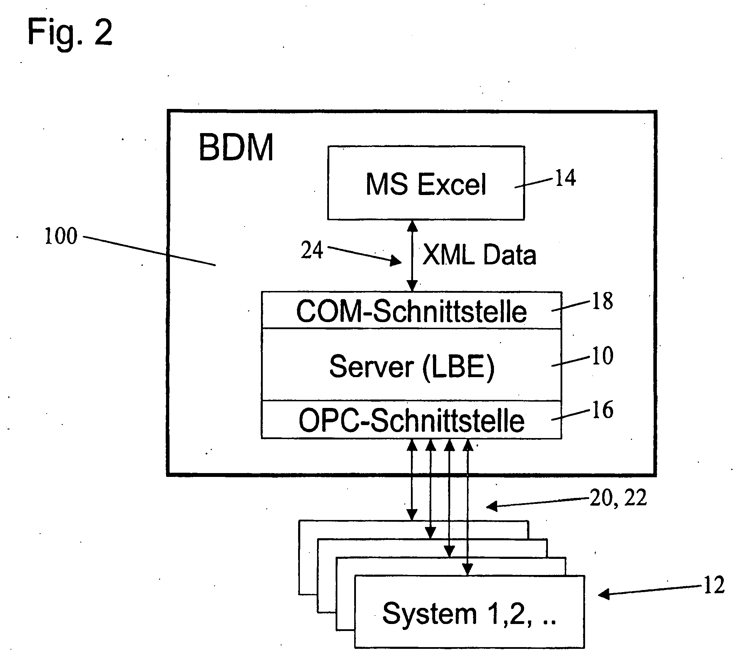

Figur 2 zeigt ein weiteres schematisches Blockschaltbild eines erfindungsgemäßen Systems. Hier sind konkrete Beispiele von Schnittstellen 16, 18 und einer Client-Anwendung 14 angegeben. Der Server 10 (LBE = "List Based Engineering") kommuniziert über eine COM-Schnittstelle 18 durch den Austausch von XML-Daten 24 (XML = "Extensible Mark-up Language") mit einer Microsoft-Excel-Anwendung 14. Der Server 10 kommuniziert über eine OPC-Schnittstelle (OPC = OLE for Process controll; OLE = Object Linking and Embedding) mit Automationssubsystemen wobei OPC-Daten einschließlich Metadaten übertragen werden.

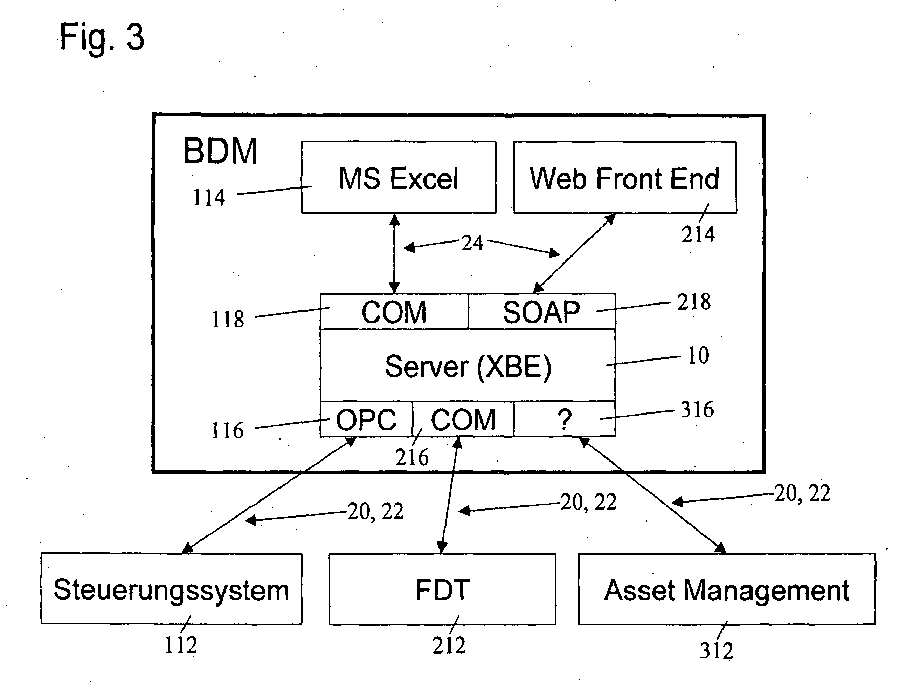

Figur 3 zeigt ein weiteres schematische Blockschaltbild eines erfindungsgemäßen Systems. Es wird ein weiteres Beispiel mit mehreren Client-Anwendungen 114, 214 gezeigt. Eine MS-Excel-Anwendung 114 kommuniziert über eine COM-Schnittstelle 118 mit dem Server 10 (XBE = XML Base Engineering). Eine Web-Front-End-Anwendung 214 kommuniziert über eine SOAP-Schnittstelle 218 ("Simple Object Process Controll") mit dem Server 10. Der Server 10 kommuniziert über eine OPC-Schnittstelle 116 mit einem Steuerungssystem 112, über eine COM-Schnittstelle 216 mit einem Field Device Tool (FDT) 212 und über eine weitere Schnittstelle mit einem als "Asset-Management" 312 bezeichneten Subsystem. Über die COM-Schnittstelle werden XML-Daten und XSD-Metadaten 20, 22 übertragen. Über die OPC-Schnittstelle 116 werden OPC-Daten übertragen. Über die COM-Schnittstelle 118 werden XML-Daten übertragen, ebenso wie über die SOAP-Schnittstelle 218.

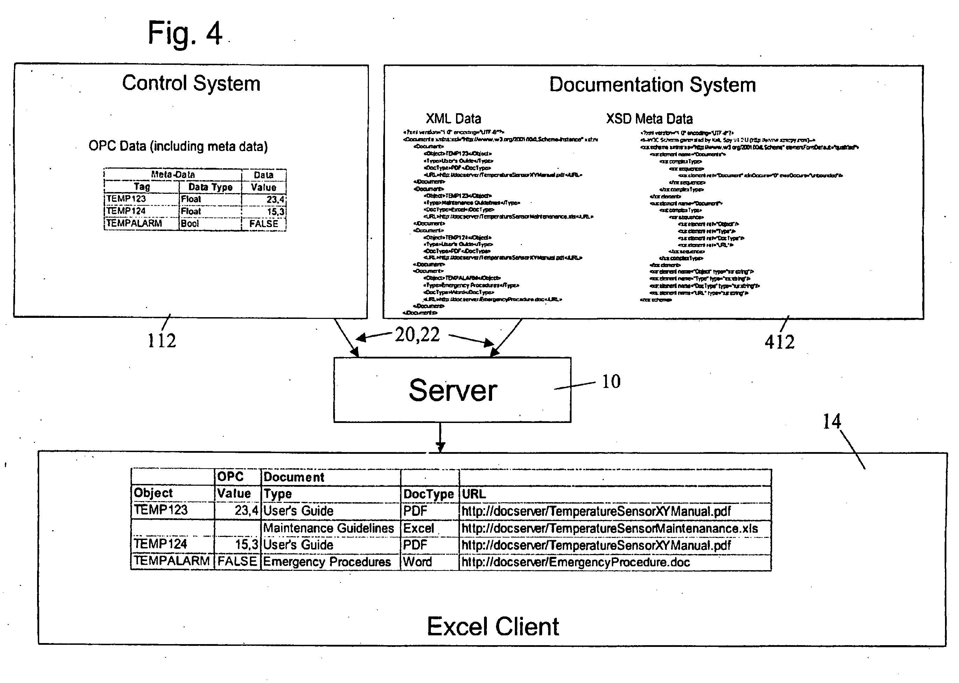

Figur 4 zeigt ein Blockschaltbild zur Erläuterung von Schritten des erfindungsgemäßen Verfahrens. Hier ist der Übersetzungsprozess von zwei Automationssubsystemen, das heißt einem OPC-System und einem System zum Bereitstellen von XML und XSD-Daten für eine Excel-Client schematisch dargestellt, wobei dieser Übersetzungsprozess von einem Server 10 durchgeführt wird.

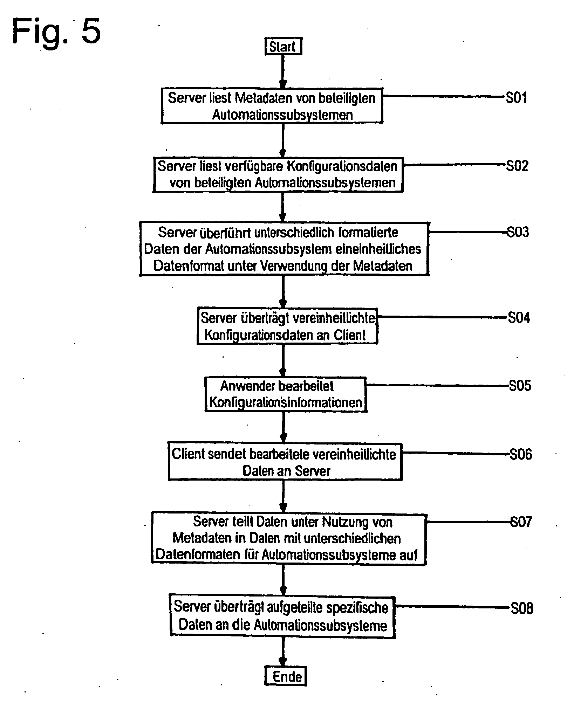

Figur 5 zeigt ein Flussdiagramm zur Erläuterung eines erfindungsgemäßen Verfahrens. Es ist ein typischer Verfahrensablauf dargestellt, der stattfindet, wenn ein Anwender einen Satz von Konfigurationsdaten ausgewählt hat, die zu bearbeiten sind.

Nach dem Start werden in Schritt S01 von dem Server Metadaten von beteiligten Automationssubsystemen gelesen.

Nachfolgend liest der Server in Schritt S02 verfügbare Konfigurationsdaten beziehungsweise Bulkdaten von beteiligten Automationssubsystemen.

In Schritt S03 übersetzt der Server unterschiedlich formatierte Daten der Automationssubsysteme in das gemeinsame Datenformat, das von einer jeweiligen Client-Anwendung gefordert wird. Dies kann erreicht werden, da der Server aufgrund der Metadaten die Datenformate und Datenstrukturen der Automationssubsysteme kennt.

In Schritt S04 überträgt der Server die so vereinheitlichten Konfigurationsdaten an die Client-Anwendung.

Der Anwender kann in Schritt S05 die Konfigurationsdaten bearbeiten, das heißt beispielsweise löschen und modifizieren. Ebenfalls kann er Konfigurationsinformation zufügen.

In Schritt S06 sendet die Client-Anwendung bearbeitete vereinheitlichte Daten an den Server zurück.

In Schritt S07 teilt der Server die Daten unter der Nutzung der Metadateninformation in Daten mit unterschiedlichen Datenformaten, so dass diese den Automationssubsystemen wieder zugänglich gemacht werden können.

Die Übertragung der aufgeteilten spezifischen Daten an die Automationssubsysteme erfolgt in Schritt S08, woraufhin der Verfahrensablauf endet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Server
- 12: Automationssubsysteme
- 112: Steuerungssystem
- 212: FDT
- 312: Asset-Management
- 412: Dokumentationssystem
- 14: Clientanwendungen
- 114: MS-Excel
- 214: Web-Front-End-Anwendung
- 16: Schnittstellen
- 116: OPC-Schnittstelle
- 216: COM-Schnittstelle
- 316: weitere Schnittstelle
- 18: Schnittstellen
- 118: COM-Schnittstelle
- 218: SOAP-Schnittstelle
- 20: Konfigurationsdaten beziehungsweise Bulkdaten
- 22: Metadaten
- 24: vereinheitlichte Konfigurationsdaten beziehungsweise Bulkdaten
- 100: Bulkdatenmanagement

## Patentansprüche

1. Verfahren zum Verarbeiten von Konfigurationsdaten beziehungsweise Bulkdaten (20) in einer Prozessumgebung mit
- mindestens einem Server (10),
- einem verteilten Automationssystem, welches eine Vielzahl von Automationssubsystemen (12) umfasst,
- mindestens einer Client-Anwendung (14),
- bidirektionalen Schnittstellen (16) zwischen den Automationssubsystemen (12) und dem mindestens einen Server (10) und
- mindestens einer bidirektionalen Schnittstelle (18) zwischen der mindestens einen Client-Anwendung (14) und dem mindestens einen Server (10),
bei dem
- zwischen der mindestens einen Client-Anwendung (14) und dem mindestens einen Server (10) Konfigurationsdaten beziehungsweise Bulkdaten (24) übertragen werden und
- zwischen dem mindestens einen Server (10) und den Automationssubsystemen (12) Konfigurationsdaten beziehungsweise Bulkdaten (20) übertragen werden,
**dadurch gekennzeichnet,**
- **dass** von den Automationssubsystemen (12) Metadaten (22) auf den mindestens einen Server (10) übertragen werden und
- **dass** der Server (10) die Metadaten (22) nutzt, um spezifische Eigenschaften der Automationssubsysteme (12) beim Verarbeiten von Konfigurationsdaten beziehungsweise Bulkdaten (20) zu berücksichtigen,
wobei der Server (10) die Information der Metadaten (22) ausnutzt um einen für ein bestimmtes Automationssubsystem (12) spezifischen Ubersetzungsprozess vorzunehmen.

2. Verfahren nach Anspruch 1, **dadurch gekennzeichnet,**
- **dass** der Server (10) Metadaten (22) von Automationssubsystemen (12) liest,
- **dass** der Server (10) Konfigurationsdaten beziehungsweise Bulkdaten (20) von den Automationssubsystemen (12) liest, die in Abhängigkeit des jeweiligen Automationssubsystems (12) unterschiedliche Formate aufweisen können,
- **dass** der Server (10) die Konfigurationsdaten beziehungsweise Bulkdaten (20) unter Nutzung der Metadaten (22) in Konfigurationsdaten beziehungsweise Bulkdaten (24) mit einem einheitlichen Datenformat überführt,
- **dass** der Server (10) die Konfigurationsdaten beziehungsweise Bulkdaten (24) mit einheitlichem Datenformat an die mindestens eine Client-Anwendung (14) überträgt,
- **daß** die Konfigurationsdaten beziehungsweise Bulkdaten (24) mit einheitlichem Datenformat durch die mindestens eine Client-Anwendung (14), insbesondere unter Eingriff eines Anwenders, bearbeitet werden,
- **dass** die bearbeiteten Konfigurationsdaten beziehungsweise Bulkdaten (24) mit einheitlichem Datenformat an den Server (10) übertragen werden.
- **dass** der Server (10) die bearbeiteten Konfigurationsdaten beziehungsweise Bulkdaten (24) mit einheitlichem Datenformat zum Übertragen an die Automationssubsysteme (12) aufteilt und unter Nutzung der Metadaten (22) in Konfigurationsdaten beziehungsweise Bulkdaten (20) überführt, die an die jeweiligen Automationssubsysteme (12) angepasste Datenformate aufweisen und
- **dass** der Server (10) die Konfigurationsdaten beziehungsweise Bulkdaten (20), die an die jeweiligen Automationssubsysteme (12) angepasste Datenformate aufweisen, an die Automationssubsysteme (12) überträgt

3. Verfahren nach Anspruch 1 oder 2, **dadurch gekennzeichnet, dass** die Metadaten (22) Information betreffend
- verfügbare Konfigurationsparameter,
- den Datentyp der Parameter,
- Standardwerte
umfassen.

4. Verfahren nach einem der vorhergehenden Ansprüche, **dadurch gekennzeichnet, dass** beim Übertragen von Daten zwischen Client-Anwendungen (14) und dem Server (10) Protokolle, Strukturen, Modelle, Technologien aus der folgenden Gruppe verwendet werden:
- SOAP ("Simple Object Access Protocol"),
- XML ("Extensible Mark-up Language"),
- .NET-Technologie (Microsoft),
- COM-Technologie (Microsoft).

5. Verfahren nach einem der vorhergehenden Ansprüche, **dadurch gekennzeichnet, dass** Client-Anwendungen aus der folgenden Gruppe verwendet werden:
- Microsoft Excel,
- Web-basierte Front-End-Anwendungen.

6. Verfahren nach einem der vorhergehenden Ansprüche, **dadurch gekennzeichnet, dass** beim Übertragen von Daten zwischen Automationssubsystemen (12) und dem Server (10) Protokolle, Strukturen, Modelle, Technologien aus der folgenden Gruppe verwendet werden:
- OPC (OLE für Prozesssteuerung; OLE = "Object Linking and Embedding"),
- SOAP ("Simple Object Access Protocol"),
- NET (Microsoft),
- COM (Microsoft),
- XML ("Extensible Mark-up Language") / XSD (XML-Schema).

7. Verfahren nach einem der vorhergehenden Ansprüchen, **dadurch gekennzeichnet, dass** eine Kommunikationsschnittstelle zu
- einem Engineering Tool für ein Prozesssteuerungssystem,
- einem Engineering Tool für ein Feldbussystem, insbesondere mit FDT-Standard (Field-Device-Tool-Standard), und/oder
- einer Integrationsplattform, die zur Systemintegration in die Prozessumgebung vorgesehen ist,
verwendet wird.

8. Verfahren nach einem der vorhergehenden Ansprüche, **dadurch gekennzeichnet, dass** der Server (10) die Kommunikation individueller Protokolle unterstützt, indem eine Schnittstelle als Plug-in eingeführt wird.

9. System zum Verarbeiten von Konfigurationsdaten beziehungsweise Bulkdaten (10) in einer Prozessumgebung mit
- mindestens einem Server (10),
- einem verteilten Automationssystem, welches eine Vielzahl von Automationssubsystemen (12) umfasst,
- mindestens einer Client-Anwendung (14),
- bidirektionalen Schnittstellen (16) zwischen den Automationssubsystemen (12) und dem mindestens einen Server (10) und
- mindestens einer bidirektionalen Schnittstelle (18) zwischen der mindestens einen Client-Anwendung (14) und dem mindestens einen Server (10),
bei dem
- zwischen der mindestens einer Client-Anwendung (14) und dem mindestens einen Server (10) Konfigurationsdaten beziehungsweise Bulkdaten (24) übertragbar sind und
- zwischen dem mindestens einen Server (10) und den Automationssubsystemen (12) Konfigurationsdaten beziehungsweise Bulkdaten (20) übertragbar sind,
**dadurch gekennzeichnet,**
- **dass** von den Automationssubsystemen (12) Metadaten (22) auf den mindestens einen Server (10) übertragbar sind und
- **dass** die Metadaten (22) von dem Server (10) nutzbar sind, um spezifische Eigenschaften der Automationssubsysteme (12) beim Verarbeiten von Konfigurationsdaten beziehungsweise Bulkdaten (20) zu berücksichtigen,
wobei die Information Metadaten (22) von dem Server (10) ausnutzbar ist, um einen für ein bestimmtes Automationssubsystem (12) spezifischen Übersetzungsprozess vorzunehmen.

10. System nach Anspruch 9, **dadurch gekennzeichnet,**
- **dass** von dem Server (10) Metadaten (22) von Automationssubsystemen (12) gelesen werden können,
- **dass** von dem Server (10) Konfigurationsdaten beziehungsweise Bulkdaten (20) von den Automationssubsystemen (12) gelesen werden können, wobei die Konfigurationsdaten beziehungsweise Bulkdaten (20) in Abhängigkeit des jeweiligen Automationssubsystems (12) unterschiedliche Formate aufweisen können,
- **dass** die Konfigurationsdaten beziehungsweise Bulkdaten (20) durch den Server (10) unter Nutzung der Metadaten (22) in Konfigurationsdaten beziehungsweise Bulkdaten (24) mit einem einheitlichen Datenformat überführbar sind,
- **dass** die Konfigurationsdaten beziehungsweise Bulkdaten (24) mit einheitlichem Datenformat durch den Server (10) an die mindestens eine Client-Anwendung (14) übertragbar sind,
- **dass** die Konfigurationsdaten beziehungsweise Bulkdaten (24) mit einheitlichem Datenformat durch die mindestens eine Client-Anwendung (14), insbesondere unter Eingriff eines Anwenders, bearbeitet werden können,
- **dass** die bearbeiteten Konfigurationsdaten beziehungsweise Bulkdaten (24) mit einheitlichem Datenformat an den Server (10) übertragbar sind,
- **dass** der Server (10) die bearbeiteten Konfigurationsdaten beziehungsweise Bulkdaten (24) mit einheitlichem Datenformat zum Übertragen an die Automationssubsysteme (12) aufteilen und unter Nutzung der Metadaten (22) in Konfigurationsdaten beziehungsweise Bulkdaten (20) überführen kann, die an die jeweiligen Automationssubsysteme (12) angepasste Datenformate aufweisen, und
- **dass** der Server (10) die Konfigurationsdaten beziehungsweise Bulkdaten (20), die an die jeweiligen Automationssubsysteme (12) angepasste Datenformate aufweisen, an die Automationssubsysteme (12) übertragen kann.

11. System nach Anspruch 9 oder 10, **dadurch gekennzeichnet, dass** die Metadaten (22) Information betreffend
- verfügbare Konfigurationsparameter,
- den Datentyp der Parameter,
- Standardwerte
umfassen.

12. System nach einem der Ansprüche 9 bis 11, **dadurch gekennzeichnet, dass** beim Übertragen von Daten zwischen Client-Anwendungen (14) und dem Server (10) Protokolle, Strukturen, Modelle, Technologien aus der folgenden Gruppe verwendet werden können:
- SOAP ("Simple Object Access Protocol"),
- XML ("Extensible Mark-up Language"),
- .NET-Technologie (Microsoft),
- COM-Technologie (Microsoft).

13. System nach einem der Ansprüche 9 bis 12, **dadurch gekennzeichnet, dass** Client-Anwendungen (14) aus der folgenden Gruppe verwendet werden können:
- Microsoft Excel,
- Web-basierte Front-End-Anwendungen.

14. System nach einem der Ansprüche 9 bis 13, **dadurch gekennzeichnet, dass** beim Übertragen von Daten zwischen Automationssubsystemen (12) und dem Server (10) Protokolle, Strukturen, Modelle, Technologien aus der folgenden Gruppe verwendet.werden kann:
- OPC (OLE für Prozessteuerung; OLE = "Object Linking and Embedding"),
- SOAP ("Simple Object Access Protocol"),
- NET (Microsoft),
- COM (Microsoft),
- XML ("Extensible Mark-up Language") / XSD (XML-Schema).

15. System nach einem der Ansprüche 9 bis 14, **dadurch gekennzeichnet, dass** eine Kommunikationsschnittstelle zu
- einem Engineering Tool für ein Prozesssteuerungssystem,
- einem Engineering Tool für ein Feldbussystem, insbesondere mit FDT-Standard (Field-Device-Tool-Standard), und/oder
- einer Integrationsplattform, die zur Systemintegration in die Prozessumgebung vorgesehen ist,
verwendbar ist.

16. System nach einem der Ansprüche 9 bis 15, **dadurch gekennzeichnet, dass** der Server (10) die Kommunikation individueller Protokolle unterstützt, indem eine Schnittstelle als Plug-in einführbar ist.

## Claims

1. A method for processing configuration data or bulk data (20) in a process environment, comprising
- at least one server (10);
- a distributed automation system which comprises a plurality of automation subsystems (12);
- at least one client application (14);
- bidirectional interfaces (16) between the automation subsystems (12) and the at least one server (10), and
- at least one bidirectional interface (18) between the at least one client application (14) and the at least one server (10), in which
- configuration data or bulk data (24) are transferred between the at least one client application (14) and the at least one server (10) and
- configuration data or bulk data (20) are transferred between the at least one server (10) and the automation subsystems (12),
**characterized in that**
- meta data (22) are transferred to the at least one server (10) from the automation subsystems (12) and
- that the server (10) uses the meta data (22) in order to consider specific properties of the automation subsystems (12) in processing configuration data or bulk data (20), with the server (10) utilizing the information of the meta data (22) in order to carry out a translation process specific to a certain automation subsystem (12).

2. A method according to claim 1, **characterized in that**
- the server (10) reads meta data (22) from the automation subsystems (12);
- the server (10) reads configuration data or bulk data (20) from the automation subsystems (12) which can have different formats depending on the respective automation subsystem (12);
- the server (10) transfers the configuration data or bulk data (20) by utilizing the meta data (22) into configuration data or bulk data (24) with a uniform data format;
- the server (10) transfers the configuration data or bulk data (24) with uniform data format to at least one client application (14);
- the configuration data or bulk data (24) with uniform data format are processed by at least one client application (14), especially by intervention of a user;
- the processed configuration data or bulk data (24) are transferred with a uniform data format to the server (10);
- the server (10) divides the processed configuration data or bulk data (24) with uniform data format for transfer to the automation subsystems (12) and by utilizing the meta data (22) transfers them into configuration data or bulk data (20) which have data formats adjusted to the respective automation subsystems (12), and
- the server (10) transfers to the automation subsystems (12) the configuration data or bulk data (20) which have data formats adjusted to the respective automation subsystems (12).

3. A method according to claim 1 or 2, **characterized in that** the meta data (22) comprise information concerning
- available configuration parameters;
- data type of parameters;
- standard values.

4. A method according to one of the preceding claims, **characterized in that** protocols, structures, models, technologies of the following group are used in the transfer of data between client applications (14) and the server (10):
- SOAP ("Simple Object Access Protocol");
- XML ("Extensible Mark-up Language");
- .NET technology (Microsoft);
- COM technology (Microsoft).

5. A method according to one of the preceding claims, **characterized in that** client applications of the following group are used:
- Microsoft Excel;
- web-based front-end applications.

6. A method according to one of the preceding claims, **characterized in that** protocols, structures, models, technologies of the following group are used in the transfer of data between automation subsystems (12) and the server (10):
- OPC (OLE for process control; OLE = "Object Linking and Embedding");
- SOAP ("Simple Object Access Protocol");
- NET (Microsoft);
- COM (Microsoft);
- XML ("Extensible Mark-up Language") / XSD (XML schema).

7. A method according to one of the preceding claims, **characterized in that** a communication interface is used for
- an engineering tool for a process control system;
- an engineering tool for a field bus system, especially with FDT standard (Field-Device-Tool standard) and/or
- an integration platform which is provided for system integration in the process environment.

8. A method according to one of the preceding claims, **characterized in that** the server (10) supports the communication of individual protocols, such that an interface is introduced as a plug-in.

9. A system for processing configuration data or bulk data (20) in process environment, comprising
- at least one server (10);
- a distributed automation system which comprises a plurality of automation subsystems (12);
- at least one client application (14);
- bidirectional interfaces (16) between the automation subsystems (12) and the at least one server (10), and
- at least one bidirectional interface (18) between the at least one client application (14) and the at least one server (10);
in which
- configuration data or bulk data (24) are transferrable between the at least one client application (14) and the at least one server (10), and
- configuration data or bulk data (20) are transferrable between the at least one server (10) and the automation subsystems (12);
**characterized in that**
- meta data (22) are transferred from the automation subsystems (12) to the at least one server (10), and
- the meta data (22) can be utilized by the server (10) in order to consider specific properties of the automation subsystems (12) in processing configuration data or bulk data (20), with the information of the meta data (22) being utilizable by the server (10) in order to carry out a specific translation process for a certain automation subsystem (12).

10. A system according to claim 9, **characterized in that**
- meta data (22) of automation subsystems (12) can be read by the server (10);
- configuration data or bulk data (20) from the automation subsystems (12) can be read by the server (10), with the configuration data or bulk data (20) having different formats depending on the respective automation subsystem (12);
- the configuration data or bulk data (20) are transferrable by the server (10) into configuration data or bulk data (24) with a uniform data format by utilizing the meta data (22);
- the configuration data or bulk data (24) with uniform data format are transferrable by the server (10) to the at least one client application (14);
- the configuration data or bulk data (24) with uniform data format can be processed by the at least one client application (14), especially by intervention of a user;
- the processed configuration data or bulk data (24) with uniform data format are transferrable to the server (10);
- the server (10) can divide the processed configuration data or bulk data (24) with uniform data format for transfer to the automation subsystems (12) and can convert the same by utilizing meta data (22) into configuration data or bulk data (20) which have data formats adjusted to the respective automation subsystems (12), and
- the server (10) can transfer to the automation subsystems (12) the configuration data or bulk data (20) which have data formats adjusted to the respective automation subsystems (12).

11. A system according to claim 9 or 10, **characterized in that** the meta data (22) comprise information concerning
- available configuration parameters;
- the data type of the parameters;
- standard values.

12. A system according to one of the claims 9 to 11, **characterized in that** protocols, structures, models, technologies from the following group can be used in the transfer of data between client applications (14) and the server (10):
- SOAP ("Simple Object Access Protocol");
- XML ("Extensible Mark-up Language");
- .NET technology (Microsoft);
- COM technology (Microsoft).

13. A system according to one of the claims 9 to 12, **characterized in that that** client applications (14) of the following group can be used:
- Microsoft Excel;
- web-based front-end applications.

14. A system according to one of the claims 9 to 13, **characterized in that** protocols, structures, models, technologies of the following group are used in the transfer of data between automation subsystems (12) and the server (10):
- OPC (OLE for process control; OLE = "Object Linking and Embedding");
- SOAP ("Simple Object Access Protocol");
- .NET (Microsoft);
- COM (Microsoft);
- XML ("Extensible Mark-up Language") / XSD (XML schema).

15. A system according to one of the claims 9 to 14, **characterized in that** a communication interface can be used for
- an engineering tool for a process control system;
- an engineering tool for a field bus system, especially with FDT standard (Field-Device-Tool standard) and/or
- an integration platform which is provided for system integration in the process environment.

16. A system according to one of the claims 9 to 15, **characterized in that** the server (10) supports the communication of individual protocols, such that an interface can be introduced as a plug-in.

## Revendications

1. Procédé pour le traitement de données de configuration ou de données en vrac (20) dans un environnement de processus avec
- au moins un serveur (10),
- un système d'automatisation réparti comprenant une pluralité de sous-systèmes d'automatisation (12),
- au moins une application cliente (14),
- des interfaces bidirectionnelles (16) entre les sous-systèmes d'automatisation (12) et l'au moins un serveur (10) et
- au moins une interface bidirectionnelle (18) entre l'au moins une application cliente (14) et l'au moins un serveur (10),
dans lequel
- des données de configuration ou des données en vrac (24) sont transmises entre l'au moins une application cliente (14) et l'au moins un serveur (10) et
- des données de configuration ou des données en vrac (20) sont transmises entre l'au moins un serveur (10) et les sous-systèmes d'automatisation (12),
**caractérisé en ce que**
- des métadonnées (22) sont transmises des sous-systèmes d'automatisation (12) vers l'au moins un serveur (10) et
- **en ce que** le serveur (10) utilise les métadonnées (22) pour prendre en compte des propriétés spécifiques des sous-systèmes d'automatisation (12) lors du traitement des données de configuration ou des données en vrac (20), le serveur (10) exploitant les informations des métadonnées (22) pour exécuter un processus de traduction spécifique pour un sous-système d'automatisation (12) donné.

2. Procédé selon la revendication 1, **caractérisé en ce que**
- le serveur (10) lit des métadonnées (22) de sous-systèmes d'automatisation (12),
- **en ce que** le serveur (10) lit des données de configuration ou des données en vrac (20) des sous-systèmes d'automatisation (12), qui peuvent avoir différents formats en fonction du sous-système d'automatisation (12) en question,
- **en ce que** le serveur (10) convertit les données de configuration ou données en vrac (20), en utilisant les métadonnées (22), en données de configuration ou données en vrac (24) ayant un format de données uniforme,
- **en ce que** le serveur (10) transmet les données de configuration ou données en vrac (24) ayant un format de données uniforme à l'au moins une application cliente (14),
- **en ce que** les données de configuration ou données en vrac (24) ayant un format de données uniforme sont traitées par l'au moins une application cliente (14), en particulier avec l'intervention d'un utilisateur,
- **en ce que** les données de configuration ou données en vrac (24) traitées ayant un format de données uniforme sont transmises au serveur (10),
- **en ce que** le serveur (10) partage les données de configuration ou données en vrac (24) traitées ayant un format de données uniforme en vue de leur transmission aux sous-systèmes d'automatisation (12) et les convertit, en utilisant les métadonnées (22), en données de configuration ou données en vrac (20) présentant des formats de données adaptés aux sous-systèmes d'automatisation (12) en question et
- **en ce que** le serveur (10) transmet les données de configuration ou données en vrac (20), présentant des formats de données adaptés aux sous-systèmes d'automatisation (12) en question aux sous-systèmes d'automatisation (12).

3. Procédé selon la revendication 1 ou 2, **caractérisé en ce que** les métadonnées (22) contiennent des informations concernant
- les paramètres de configuration disponible,
- le type de données des paramètres,
- des valeurs standard.

4. Procédé selon l'une des revendications précédentes, **caractérisé en ce que** lors de la transmission de données entre les applications clientes (14) et le serveur (10), des protocoles, structures, modèles ou technologies appartenant au groupe suivant sont utilisés :
- SOAP (« Simple Object Access Protocol »),
- XML (« Extensible Mark-up Language »),
- technologie .NET (Microsoft),
- technologie COM (Microsoft).

5. Procédé selon l'une des revendications précédentes, **caractérisé en ce que** des applications clientes appartenant au groupe suivant sont utilisées :
- Microsoft Excel,
- applications frontales en base Web.

6. Procédé selon l'une des revendications précédentes, **caractérisé en ce que** lors de la transmission de données entre les sous-systèmes d'automatisation (12) et le serveur (10), des protocoles, structures, modèles ou technologies appartenant au groupe suivant sont utilisés :
- OPC (OLE pour la commande des processus ; OLE = « Object Linking and Embedding »),
- SOAP (« Simple Object Access Protocol »),
- .NET (Microsoft)
- COM (Microsoft),
- XML (« Extensible Mark-up Language ») / XSD (XML Schema).

7. Procédé selon l'une des revendications précédentes, **caractérisé en ce qu'**une interface de communication vers
- un outil d'ingénierie pour un système de commande de processus,
- un outil d'ingénierie pour un système de bus de terrain, en particulier au standard FDT (Field Device Tool), et/ou
- une plate-forme d'intégration destinée à l'intégration du système dans l'environnement de processus
est utilisée.

8. Procédé selon l'une des revendications précédentes, **caractérisé en ce que** le serveur (10) prend en charge la communication selon des protocoles individuels par le fait qu'une interface est introduite sous la forme d'un *plug-in*.

9. Système pour le traitement de données de configuration ou de données en vrac (10) dans un environnement de processus, avec
- au moins un serveur (10),
- un système d'automatisation réparti comprenant une pluralité de sous-systèmes d'automatisation (12),
- au moins une application cliente (14),
- des interfaces bidirectionnelles (16) entre les sous-systèmes d'automatisation (12) et l'au moins un serveur (10) et
- au moins une interface bidirectionnelle (18) entre l'au moins une application cliente (14) et l'au moins un serveur (10),
dans lequel
- des données de configuration ou des données en vrac (24) peuvent être transmises entre l'au moins une application cliente (14) et l'au moins un serveur (10) et
- des données de configuration ou des données en vrac (20) peuvent être transmises entre l'au moins un serveur (10) et les sous-systèmes d'automatisation (12),
**caractérisé en ce que**
- des métadonnées (22) peuvent être transmises des sous-systèmes d'automatisation (12) vers l'au moins un serveur (10) et
- **en ce que** le serveur (10) peut utiliser les métadonnées (22) pour prendre en compte des propriétés spécifiques des sous-systèmes d'automatisation (12) lors du traitement des données de configuration ou des données en vrac (20), le serveur (10) pouvant exploiter les informations des métadonnées (22) pour exécuter un processus de traduction spécifique pour un sous-système d'automatisation (12) donné.

10. Système selon la revendication 9, **caractérisé en ce que**
- le serveur (10) peut lire des métadonnées (22) de sous-systèmes d'automatisation (12),
- **en ce que** le serveur (10) peut lire des données de configuration ou des données en
- vrac (20) des sous-systèmes d'automatisation (12), lesquelles données de configuration ou des données en vrac (20) peuvent avoir différents formats en fonction du sous-système d'automatisation (12) en question,
- **en ce que** le serveur (10) peut convertir les données de configuration ou données en vrac (20), en utilisant les métadonnées (22), en données de configuration ou données en vrac (24) ayant un format de données uniforme,
- **en ce que** le serveur (10) peut transmettre les données de configuration ou données en vrac (24) ayant un format de données uniforme à l'au moins une application cliente (14),
- **en ce que** les données de configuration ou données en vrac (24) ayant un format de données uniforme peuvent être traitées par l'au moins une application cliente (14), en particulier avec l'intervention d'un utilisateur,
- **en ce que** les données de configuration ou données en vrac (24) traitées ayant un format de données uniforme peuvent être transmises au serveur (10),
- **en ce que** le serveur (10) peut partager les données de configuration ou données en vrac (24) traitées ayant un format de données uniforme en vue de leur transmission aux sous-systèmes d'automatisation (12) et les convertir, en utilisant les métadonnées (22), en données de configuration ou données en vrac (20) présentant des formats de données adaptés aux sous-systèmes d'automatisation (12) en question et
- **en ce que** le serveur (10) peut transmettre les données de configuration ou données en vrac (20), présentant des formats de données adaptés aux sous-systèmes d'automatisation (12) en question aux sous-systèmes d'automatisation (12).

11. Système selon la revendication 9 ou 10, **caractérisé en ce que** les métadonnées (22) contiennent des informations concernant
- les paramètres de configuration disponible,
- le type de données des paramètres,
- des valeurs standard.

12. Système selon l'une des revendications 9 à 11, **caractérisé en ce que** lors de la transmission de données entre les applications clientes (14) et le serveur (10), des protocoles, structures, modèles ou technologies appartenant au groupe suivant sont utilisés :
- SOAP (« Simple Object Access Protocol »),
- XML (« Extensible Mark-up Language »),
- technologie .NET (Microsoft),
- technologie COM (Microsoft).

13. Système selon l'une des revendications 9 à 12, **caractérisé en ce que** des applications clientes appartenant (14) au groupe suivant sont utilisées :
- Microsoft Excel,
- applications frontales en base Web.

14. Système selon l'une des revendications 9 à 13, **caractérisé en ce que** lors de la transmission de données entre les sous-systèmes d'automatisation (12) et le serveur (10), des protocoles, structures, modèles ou technologies appartenant au groupe suivant sont utilisés :
- OPC (OLE pour la commande des processus ; OLE = « Object Linking and Embedding »),
- SOAP (« Simple Object Access Protocol »),
- .NET (Microsoft)
- COM (Microsoft),
- XML (« Extensible Mark-up Language ») / XSD (XML Schema).

15. Système selon l'une des revendications 9 à 14, **caractérisé en ce qu'**une interface de communication vers
- un outil d'ingénierie pour un système de commande de processus,
- un outil d'ingénierie pour un système de bus de terrain, en particulier au standard FDT (Field Device Tool), et/ou
- une plate-forme d'intégration destinée à l'intégration du système dans l'environnement de processus
est utilisée.

16. Système selon l'une des revendications 9 à 15, **caractérisé en ce que** le serveur (10) prend en charge la communication selon des protocoles individuels par le fait qu'une interface est introduite sous la forme d'un *plug-in*.
